# EUROPÄISCHE PATENTSCHRIFT

(11) **EP 0 640 510 B1**
(45) Veröffentlichungstag und Bekanntmachung des Hinweises auf die Patenterteilung: **05.03.1997**
(21) Anmeldenummer: 94112701.1
(22) Anmeldetag: 13.08.1994
(51) Int. Cl.: B60Q 1/068

(54) **Einstellanordnung für einen Reflektor in Kraftfahrzeugscheinwerfern**
Positioning device for a vehicle headlamp reflector
Dispositif de positionnement pour le réflecteur d'un phase de véhicule

(30) Priorität: 25.08.1993 DE 4328529
(43) Veröffentlichungstag der Anmeldung: 01.03.1995
(73) Patentinhaber: Hella KG Hueck & Co., 59552 Lippstadt (DE)
(72) Erfinder: Kurkofka, Waldemar, D-33378 Rheda-Wiedenbrück (DE); Hahne, Josef, D-59556 Lippstadt (DE)

(56) Entgegenhaltungen:
- FR-A- 2 598 127
- US-A- 5 186 532

## Beschreibung

Die Erfindung betrifft eine Einstellanordnung für einen Reflektor in Kraftfahrzeugscheinwerfern, wobei der Reflektor mit einem feststehenden Aufnahmeteil um eine oder um zwei quer zueinander verlaufende Achsen verschwenkbar verbunden ist und zumindest eine der Verbindungen zwischen dem Reflektor und dem Aufnahmeteil durch eine Einstellvorrichtung hergestellt ist, welche einen aus einem Zahnrad und einer Zahnstange bestehenden Antrieb aufweist, dessen Zahnrad an dem Aufnahmeteil verdrehbar gelagert ist und mit seinen Zähnen in den Zähnen der Zahnstange kämmt, welche auf der dem Zahnrad abgewandten Seite an der Innenseite des Aufnahmeteils in ihrer Längsausdehnung verschiebbar geführt ist, welche mit einer die Zähne aufweisenden breiten Seitenfläche parallel zu der Schwenkachse verläuft, um die der Reflektor beim Verschieben der Zahnstange schwenkt, und welche mit einem freien Endabschnitt über ein Gelenk mit dem Reflektor verbunden ist und den Reflektor trägt und welche mindestens in einem Einstellbereich des Reflektors in einem Bogen verläuft und am Gelenk einem Kreisbogen folgt, den der Reflektor bei seinem Schwenken um die Schwenkachse vorgibt.

Eine solche Einstellanordnung für einen Reflektor in Kraftfahrzeugscheinwerfern ist aus der US-A 5 186 532 bekannt geworden. Die Zahnstange weist an einem freien Ende eine Gelenkschale auf, in welche eine Gelenkkugel des Reflektors eingesetzt ist. Beim Verdrehen des Zahnrades, welches mit seinen Zähnen in den Zähnen der Zahnstange kämmt, schwenkt der Reflektor um eine Achse. Um die beim Verschwenken des Reflektors entstehenden Verspannungskräfte zwischen der Zahnstange und dem Reflektor herabzusetzen, verläuft die Zahnstange in einem leicht gekrümmten Bogen. Der Bogen der Zahnstange weist eine wesentlich kleinere Krümmung als der Kreisbogen auf, den der Reflektor bei seinem Verschwenken um die Schwenkachse am Reflektor vorgibt. Somit kann die Zahnstange am Gelenk nur in einer nicht ausreichenden Größe dem Kreisbogen des Reflektors am Gelenk folgen und es bestehen weiterhin große Verspannungskräfte zwischen Reflektor und Zahnstange. Ein verspannungsfreies Verschwenken des Reflektors ist nur dann möglich, wenn der Bogen der Zahnstange mit dem Kreisbogen des Reflektors am Gelenk zusammenfällt. Bei den meisten Scheinwerfern müßte eine solche Zahnstange in einem so stark gekrümmten Bogen verlaufen, daß das in der Zahnstange kämmende Zahnrad nur in einem sehr engen Bereich nahe der Rückseite des Reflektors angeordnet werden kann. Da das Zahnrad als Betätigungsglied dient, muß jedoch sein Anbringungsort zumindest in der Tiefe des Scheinwerfer variabel sein. Zudem kann eine stark gekrümmte und lang ausgeführte Zahnstange bei vielen Scheinwerfern aus Platzgründen nicht montiert werden und ist bei vielen Scheinwerfern nicht universell verwendbar.

Zudem ist eine Einstellanordnung für einen Reflektor in Kraftfahrzeugscheinwerfern aus der DE-G 85 33 781.1 bekannt. Bei dem Kraftfahrzeugscheinwerfer dient als Aufnahmeteil ein aus Kunststoff bestehendes,schalenförmiges Gehäuse, auf dessen äußeren umlaufenden Rand eine schalenförmige, lichtdurchlässige Abschlußscheibe dicht aufgesetzt ist. In dem von Gehäuse und Abschlußscheibe gebildeten Innenraum des Scheinwerfers ist der um eine horizontale und vertikale Achse verschwenkbare Reflektor angeordnet. Beim Verstellen des aus Zahnrad und Zahnstange bestehenden Antriebs schwenkt der Reflektor um eine vertikale Achse. Das Zahnrad ist in einer Öffnung des Gehäuses verdrehbar gelagert und weist an der Außenseite des Gehäuses eine Handhabe zu seinem Verdrehen auf. Die Zähne der Zahnstange sind an einer in einer vertikalen Ebene verlaufenden breiten Seitenfläche einer im Querschnitt rechteckförmigen Wand angeformt, welche sich in ihrer Längsausdehnung horizontal und parallel zur optischen Achse erstreckt. Die Zähne der Zahnstange und des Zahnrades verlaufen in ihrer Längsausdehnung wie die Drehachse des Zahnrades vertikal. An die Rückseite der im Querschnitt rechteckförmigen Wand der Zahnstange ist an beide Längsseiten der Wand jeweils eine über die gesamte Länge des Zahnrades verlaufende Rippe angeformt. Durch die beiden an die Wand angeformten Rippen ist die Zahnstange im Querschnitt U-förmig gestaltet. Die Zahnstange greift mit den Schenkeln ihrer U-Form in die Führung des Gehäuses ein, welche von einer in die Innenseite des Gehäuses eingebrachten Nut, welche im Querschnitt U-förmig gestaltet ist, gebildet ist. Dabei liegt die Zahnstange ausschließlich mit den beiden Schenkeln an den sich zugewandten Innenseiten der im Querschnitt U-förmigen Nut des Gehäuses an. Die Grundfläche der Nut des Gehäuses dient für die Zahnstange nicht als Gleitfläche, da sie mit den freien Enden ihrer Schenkel zu der Grundfläche beabstandet ist. Die Zahnstange ist seitlich neben dem äußeren Rand des schalenförmigen Reflektors angeordnet und weist auf der Seite ihrer Verzahnung angeformte Wände auf, an welche direkt oberhalb der Verzahnung ein Befestigungsmittel angebracht ist, mit welchem die Zahnstange starr mit dem äußeren Rand des Reflektors verbunden ist. Damit der Reflektor durch die aus Zahnstange, Zahnrad und Führung des Gehäuses bestehende Einstellvorrichtung klapperfrei getragen ist, muß die Zahnstange radial zur ihrer Längsausdehnung spielfrei an dem Zahnrad anliegen. Diese spielfreie Anlage ist in der Massenfertigung nicht oder nur mit sehr großem Aufwand einzuhalten, da die spielfreie Anlage nicht nur durch das Zahnrad und die Zahnstange selbst bestimmt ist, sondern zusätzlich auch durch das Gehäuse, den Reflektor und die die vertikale Schwenkachse bildenden Verbindungselemente.

Deshalb müssen diese vielen Teile sehr eng toleriert werden und die die spielfreie Anlage bestimmenden Toleranzen müßten so gewählt sein, daß die Zahnstange gepreßt an dem Zahnrad anliegt. Durch diesen Anpreßdruck können im Reflektor, insbesondere wenn er dünnwandig gestaltet und aus Kunststoff hergestellt ist, so große Verspannungskräfte entstehen, daß durch ihn die Lichtstrahlen einer Lichtquelle des Scheinwerfers in eine unerwünschte Richtung reflektiert werden. Damit der Reflektor in jeder Stellung der Zahnstange vibrationsfrei gehalten ist, muß in jeder Stellung der Zahnstange ein Anpreßdruck zwischen ihr und dem Zahnrad bestehen. Der zwischen Zahnrad und Zahnstange bestehende Anpreßdruck ist in der mittleren Stellung der Zahnstange am größten und in den beiden Endstellungen der Zahnstange am kleinsten, weil die Zahnstange in ihrer Längsausdehnung geradlinig verläuft und wegen ihrer starren Verbindung zum Reflektor beim Verschwenken des Reflektors einen Kreisbogen beschreibt. Damit der Anpreßdruck sich beim Verschwenken des Reflektors nur so wenig wie möglich verändert, ist die Zahnstange seitlich neben dem Reflektor und die Verbindungsstelle zwischen Zahnstange und Zahnrad direkt oberhalb der Verzahnung der Zahnstange angeordnet, wobei die die Verzahnung aufweisende, ebene breite Seitenfläche der Zahnstange einen um die vertikale Schwenkachse gehenden Kreisbogen tangiert. Hierbei ist es jedoch nachteilig, daß der schalenförmige Reflektor wegen der seitlich neben ihm angeordneten Zahnstange nicht so groß wie möglich ausgeführt werden kann.

Aus der DE 40 41 676 A 1 ist eine Einstellanordnung für einen Reflektor in einem Kraftfahrzeugscheinwerfer bekanntgeworden, bei welchem die Zahnstange ein Teil eines automatischen Leuchtweitereglers ist und mit ihrer Rückseite an die Mantelfläche eines Verstellbolzens angeformt ist, welcher mit dem zur Rückseite des Scheinwerfers gerichteten freien Endabschnitt in einer feststehenden Hülse axial geführt ist und an dem in Lichtaustrittsrichtung gerichteten freien Endabschnitt einen Kugelkopf trägt, welcher in eine Gelenkpfanne des Reflektors eingreift. Da die Führung der Zahnstange nicht an ihrer Rückseite erfolgt, sondern in einem großen Abstand zu der Zahnstange, ist der kämmende Eingriff der Zahnstange in dem Ritzel nicht sichergestellt, und außerdem treten beim Verschwenken des Reflektors zwischen ihm und dem Verstellbolzen Verspannungskräfte auf, da beim Verschwenken des Reflektors seine Gelenkschale sich auf einem Kreisbogen bewegt und der Verstellbolzen axial geführt ist.

Aufgabe der Erfindung ist es, die im Oberbegriff des Anspruchs 1 beschriebene Einstellanordnung für einen Reflektor in Kraftfahrzeugscheinwerfern derart zu gestalten, daß bei einem Verschwenken des Reflektors durch den aus Zahnrad und Zahnstange bestehenden Antrieb auch dann zwischen der Zahnstange und dem Reflektor keine unerwünscht großen Verspannungskräfte entstehen, wenn die Zahnstange nicht in einem so stark gekrümmten Bogen verlaufen muß, daß der Mittelpunkt des Bogens auf der Schwenkachse liegt, um welche der Reflektor beim Verstellen der Zahnstange schwenkt.

Diese Aufgabe wird nach der Erfindung dadurch gelöst, daß die Zahnstange in dem zwischen dem Zahnrad und dem Gelenk verlaufenden Teilabschnitt, quer zu den breiten Seitenflächen der Zahnstange, zumindest abschnittsweise einen so kleinen Querschnitt aufweist, daß die Zahnstange in ihrem Teilabschnitt zu einem Bogen biegbar ist. Dadurch kann der Reflektor aus einer aus Kunststoff hergestellten, dünnwandigen Schale bestehen, ohne daß er bei seinem Verstellen durch innere Verspannungskräfte deformiert wird. Hierbei ist es weiterhin vorteilhaft, wenn das Gelenk aus einem Kugelkopf, welcher an den in Lichtaustrittsrichtung gerichteten freien Endabschnitt der Zahnstange angeformt ist, und aus einer Gelenkpfanne besteht, welche an die Rückseite des Reflektors angeformt ist. Ein solches Gelenk ist einfach und kostengünstig herstellbar.

Weiterhin ist es vorteilhaft, wenn die Zahnstange in ihrem Querschnitt durch Kerben geschwächt ist, welche auf der dem Zahnrad abgewandten Rückseite eingebracht sind, quer zur Längsausdehnung der Zahnstange verlaufen, untereinander einen gleich großen Abstand zueinander aufweisen und sich zu ihrem Grund hin verjüngen. Dadurch sind die Kerben einfach zu entformen, und die Zahnstange ist zu einem gleichförmigen Bogen biegbar. Stellt sich in der Praxis heraus, daß die Zahnstange den Reflektor wegen einer zu kleinen Biegesteifigkeit nicht vibrationsfrei halten kann, so können die die Kerben formenden Werkzeugteile an ihrem freien Ende gekürzt werden, um zu erreichen, daß die Zahnstange zwischen den Kerben einen größeren Querschnitt aufweist und zu ihrem Biegen eine größere Kraft notwendig ist. Eine die Tiefe der Kerben verkleinernde nachträgliche Maßnahme ist einfach und kostengünstig durchführbar.

Vorteilhaft ist es weiterhin, wenn die Kerben in mindestens eine an die Rückseite der Zahnstange angeformte und in Längsausdehnung der Zahnstange verlaufende Rippe eingebracht sind. Dadurch ist unter Beibehaltung einer kleinen Biegesteifigkeit für die Zahnstange ein Wegkippen der Zahnstange durch die im Fahrbetrieb entstehenden senkrechten Vibrationskräfte erschwert. Die Biegesteifigkeit der Zahnstange erhöht sich nicht, wenn die Kerben die Rippen in ihrer gesamten Höhe schlitzen. Bei Kerben, welche die Rippen nicht in ihrer gesamten Höhe schlitzen, erhöht sich nicht nur die Biegesteifigkeit für die Zahnstange, sondern es verkleinert sich auch die Gefahr des Wegkippens der Zahnstange durch eine vertikale Kraft. Die Verwendung von einer Rippe ist besonders dann vorteilhaft, wenn die Zahnstange aus einer im Querschnitt rechteckförmigen Wand besteht, an deren einer breiten Seitenfläche die Verzahnung und an der anderen die Rippe angebracht ist, wobei die rechteckförmige Wand mit ihren breiten Seitenflächen senkrecht verläuft. In diesem Zusammenhang ist es weiterhin vorteilhaft, wenn die Zahnstange bei zwei an ihrer Rückseite angeformten Rippen, in Richtung ihrer Längsausdehnung gesehen, U-förmig gestaltet ist und zwischen drei Stellen fest eingespannt ist, von denen eine Stelle von dem Zahnrad gebildet ist und die beiden anderen Stellen von einer Gleitfläche der Führung des Gehäuses gebildet sind, wobei, quer zur Längsausdehnung der Zahnstange gesehen, das Zahnrad zwischen den beiden Stellen der Gleitfläche angeordnet ist. Dadurch ist auch bei großen Toleranzen sichergestellt, daß die Zahnstange spielfrei zwischen der Führung und dem Zahnrad gehalten ist.

Von Vorteil ist es weiterhin, wenn die Zahnstange in ihrem eingespannten Zustand einen Kreisbogen beschreibt, dessen Mittelpunkt in der Nähe des Mittelpunktes des Kreisbogens liegt, welchen der Reflektor bei seinem Verschwenken am Gelenk beschreibt. Dadurch entstehen beim Verschwenken des Reflektors keine Verspannungskräfte zwischen der Zahnstange und dem Reflektor, und die Zahnstange ist universell bei verschiedenen Scheinwerfern verwendbar, da sie zu dem jeweils erforderlichen Bogen biegbar ist.

Weitere vorteilhafte Weiterbildungen der Erfindung sind in den Unteransprüchen 9 und 10 dargelegt.

Ein Ausführungsbeispiel der Erfindung ist in der Zeichnung dargestellt, und zwar zeigt
- Fig. 1: einen Teilausschnitt eines horizontal verlaufenden Mittelschnitts durch eine Einstellvorrichtung eines Kraftfahrzeugscheinwerfers,

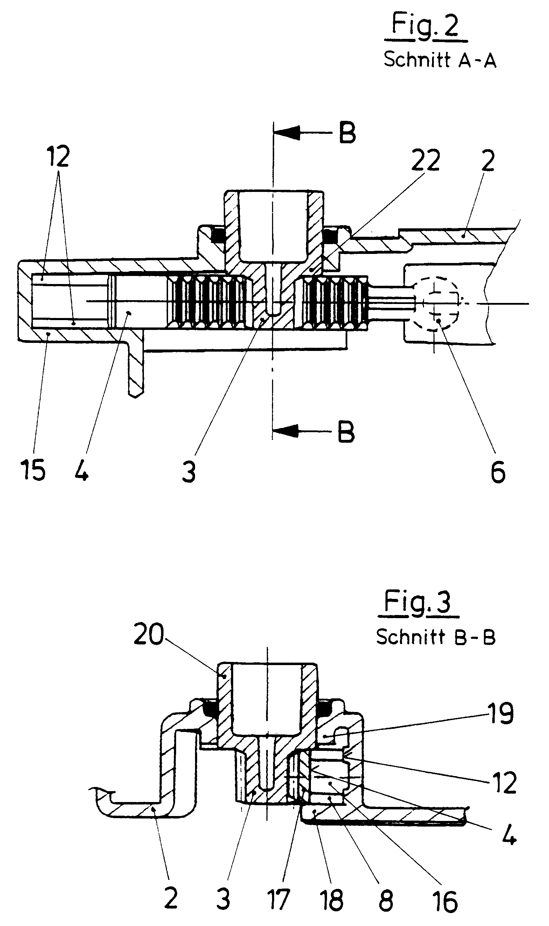

- Fig. 2: einen Schnitt nach der Linie A-A in Fig. 1 und
- Fig. 3: einen Schnitt nach der Linie B-B in Fig. 2.

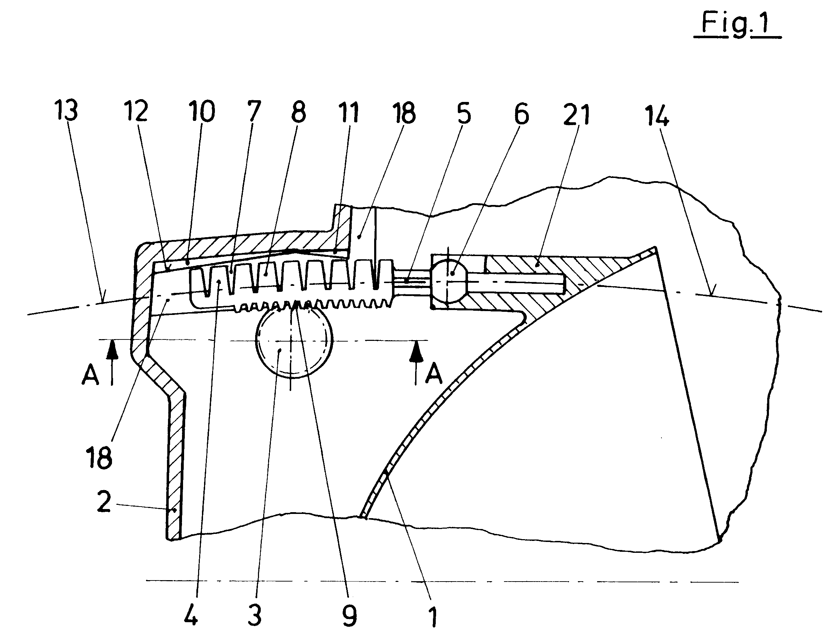

Ein in Fig. 1 dargestellter Scheinwerfer weist einen aus Kunststoff hergestellten, dünnwandigen Reflektor (1) auf, welcher in ein von einem Aufnahmeteil (2) gebildeten, schalenförmigen Gehäuse eingesetzt ist. Das schalenförmige Gehäuse ist aus Kunststoff hergestellt und durch eine nicht dargestellte lichtdurchlässige Abschlußscheibe abgedeckt, welche mit ihrem äußeren Rand in dem äußeren umlaufenden Rand des Gehäuses dicht anliegt und mit diesem fest verbunden ist. Der Reflektor (1) ist in dem Gehäuse um zwei senkrecht zueinander verlaufende Achsen (nicht dargestellt) verschwenkbar gelagert. Eine der Verbindungen zwischen dem Gehäuse und dem Reflektor (1) ist durch eine Einstellvorrichtung hergestellt, welche einen aus einem Zahnrad (3) und einer Zahnstange (4) bestehenden Antrieb aufweist. Das Zahnrad (3) ist in einer Öffnung einer oberen Seitenwand des Gehäuses verdrehbar gelagert und ragt mit einem als Handhabe dienenden Griffteil (20) nach außen. Das im Scheinwerferinneren angeordnete Zahnrad (3) kämmt mit seinen Zähnen in den Zähnen der Zahnstange (4), welche einen in Lichtaustrittsrichtung gerichteten, zapfenartigen, freien Endabschnitt (5) aufweist, welcher an seinem freien Ende einen Kugelkopf trägt. Der Kugelkopf ist in einer Gelenkpfanne eines an die Rückseite des Reflektors (1) angeformten Ansatzes (21) selbstrastend eingesetzt und bildet zusammen mit der Gelenkpfanne das Gelenk (6). Der die Zähne aufweisende Abschnitt der Zahnstange (4) ist in seinem Querschnitt U-förmig gestaltet, wobei der die Schenkel der U-Form verbindende Steg von einer im Querschnitt rechteckförmigen Wand (17) gebildet ist, und die Schenkel in Längsausdehnung der Zahnstange (4) verlaufende Rippen (8) sind. In Anbaulage des Scheinwerfers steht die die Zähne der Zahnstange (4) aufweisende Wand (17) hochkant, und sowohl die Zähne der Zahnstange (4) als auch des Zahnrades (3) verlaufen in ihrer Längsausdehnung vertikal. Die beiden Rippen (8) der Zahnstange (4) sind durch untereinander einen gleich großen Abstand zueinander aufweisende Kerben in ihrer gesamten Höhe geschlitzt. Dadurch ist die Zahnstange (4), in ihrer gesamten Länge zu einem gleichförmigen Bogen biegbar. Die Zahnstange (4) ist in einer in die Innenseite des Gehäuses eingebrachten Führung (16), welche von einer im Querschnitt U-förmigen Nut gebildet ist, in ihrer Längsausdehnung geführt. Dabei grenzt die Zahnstange (4) mit den sich abgewandten Seitenflächen der beiden Rippen (8) an die sich zugewandten Innenseiten der Führung (16) an. Die Zahnstange (4) ist, in Richtung der Drehachse des Zahnrades (3) gesehen, zwischen drei Stellen (9, 10 und 11) fest eingespannt. Die Stelle (9) besteht zwischen den ineinanderkämmenden Zähnen des Zahnrades (3) und der Zahnstange (4), während die Stellen (10 und 11) zwischen den freien Enden der beiden Rippen (8) und der Grundfläche der im Querschnitt U-förmigen Führung (16), welche eine Gleitfläche (12) für die Zahnstange (4) ist, bestehen. Die beiden Stellen (11 und 12) sind durch zwei in einem stumpfen Winkel zueinander verlaufende Abschnitte der Gleitfläche (12) gebildet, wobei die Winkelhalbierende des stumpfen Winkels durch die Drehachse des Zahnrades (3) verläuft. Zwischen die drei Stellen (9, 10 und 11) ist die Zahnstange mit einer so großen Vorspannung eingesetzt, daß sie, in Richtung der Drehachse des Zahnrades (3) gesehen, einen Kreisbogen (13) beschreibt, dessen Mittelpunkt mit einem Mittelpunkt eines Kreisbogens (14) zusammenfällt, welchen das Gelenk (6) beim Verschwenken des Reflektors (1) um die vertikale Schwenkachse beschreibt. Der zur Rückseite des Scheinwerfers hin gerichtete freie Endabschnitt der Zahnstange (4) ist in einer von der Rückseite des Gehäuses gebildeten Tasche (15) radial nach allen Seiten geführt. Die im Querschnitt U-förmige Führung (16) des Gehäuses weist einen unteren Wandabschnitt (18) auf, welcher sich annähernd bis zu dem zapfenartigen freien Endabschnitt (5) der Zahnstange (4) und den Zähnen der Zahnstange (4) hin erstreckt. Zwischen dem Wandabschnitt (18) und einer umlaufenden Schulter (22) des Zahnrades (3), welche an die Zähne des Zahnrades (3) angrenzt, ist die Zahnstange (4) vertikal spielfrei gehalten. Der Wandabschnitt (18) der Führung (16) ragt, in Richtung der Lichtaustrittsrichtung gesehen, über die Gleitfläche (12) der Führung (16) hinaus.

### Bezugszahlen

### Einstellanordnung für einen Reflektor in Kraftfahrzeugscheinwerfern

- (1): Reflektor
- (2): Aufnahmeteil
- (3): Zahnrad
- (4): Zahnstange
- (5): Endabschnitt
- (6): Gelenk
- (7): Kerben
- (8): Rippe
- (9): Stelle
- (10): Stelle
- (11): Stelle
- (12): Gleitfläche
- (13): Kreisbogen
- (14): Kreisbogen
- (15): Tasche
- (16): Führung
- (17): Wand
- (18): Wandabschnitt
- (19): Wandabschnitt
- (20): Griffteil
- (21): Ansatz
- (22): Schulter

## Patentansprüche

1. Einstellanordnung für einen Reflektor in Kraftfahrzeugscheinwerfern, wobei der Reflektor (1) mit einem feststehenden Aufnahmeteil (2) um eine oder um zwei quer zueinander verlaufende Achsen verschwenkbar verbunden ist und zumindest eine der Verbindungen zwischen dem Reflektor (1) und dem Aufnahmeteil (2) durch eine Einstellvorrichtung hergestellt ist, welche einen aus einem Zahnrad (3) und einer Zahnstange (4) bestehenden Antrieb aufweist, dessen Zahnrad (3) an dem Aufnahmeteil (2) verdrehbar gelagert ist und mit seinen Zähnen in den Zähnen der Zahnstange (4) kämmt, welche auf der dem Zahnrad (3) abgewandten Seite an der Innenseite des Aufnahmeteils (2) in ihrer Längsausdehnung verschiebbar geführt ist, welche mit einer die Zähne aufweisenden breiten Seitenfläche parallel zu der Schwenkachse verläuft, um welche der Reflektor (1) beim Verschieben der Zahnstange (4) schwenkt, und welche mit einem freien Endabschnitt (5) über ein Gelenk (6) mit dem Reflektor (1) verbunden ist und den Reflektor (1) trägt und welche mindestens in einem Einstellbereich des Reflektors in einem Bogen verläuft und am Gelenk (6) einem Kreisbogen (14) folgt, den der Reflektor (1) bei seinem Schwenken um die Schwenkachse vorgibt, dadurch gekennzeichnet, daß die Zahnstange (4) in einem zwischen dem Zahnrad (3) und dem Gelenk (6) verlaufenden Teilabschnitt, quer zu den breiten Seitenflächen der Zahnstange(4), zumindest abschnittsweise einen so kleinen Querschnitt aufweist, daß die Zahnstange (4) zu einem Bogen biegbar ist.

2. Einstellanordnung nach Anspruch 1, dadurch gekennzeichnet, daß die Zahnstange (4) in ihrem Querschnitt durch Kerben (7) geschwächt ist, welche auf der dem Zahnrad (3) abgewandten Rückseite eingebracht sind und quer zur Längsausdehnung der Zahnstange (4) verlaufen.

3. Einstellanordnung nach Anspruch 2, dadurch gekennzeichnet, daß die Kerben (7) untereinander einen gleich großen Abstand zueinander aufweisen.

4. Einstellanordnung nach Anspruch 1 oder 2, dadurch gekennzeichnet, daß die Kerben (7) sich zu ihrem Grund hin verjüngen.

5. Einstellanordnung nach einem der Ansprüche 2 bis 4, dadurch gekennzeichnet, daß die Kerben (7) in mindestens eine an die Rückseite der Zahnstange (4) angeformte und in Längsausdehnung der Zahnstange (4) verlaufende Rippe (8) eingebracht sind.

6. Einstellanordnung nach Anspruch 5, dadurch gekennzeichnet, daß die Kerben (7) die Rippe zumindest zum Teil in ihrer gesamten Höhe schlitzen.

7. Einstellanordnung nach einem der Ansprüche 1 bis 6, dadurch gekennzeichnet, daß die Zahnstange (4) zwischen drei Stellen (9, 10 und 11) fest eingespannt ist, von denen eine Stelle (9) von dem Zahnrad (3) gebildet ist und die beiden anderen Stellen (10 und 11) von einer Gleitfläche (12) der Führung (16) des Aufnahmeteils (2) gebildet sind, wobei, quer zur Längsausdehnung der Zahnstange (4) gesehen, die Stelle (9) zwischen den beiden Stellen (10 und 11) angeordnet ist.

8. Einstellanordnung nach Anspruch 7, dadurch gekennzeichnet, daß die Zahnstange (4) in ihrem eingespannten Zustand einen Kreisbogen (13) beschreibt, dessen Mittelpunkt in der Nähe des Mittelpunktes des Kreisbogens (14) liegt, welchen der Reflektor (1) am Gelenk (6) bei seinem Verschwenken beschreibt.

9. Einstellanordnung nach Anspruch 7 oder 8, dadurch gekennzeichnet, daß die für die Rückseite der Zahnstange (4) dienende Gleitfläche (12) der Führung (16) des Aufnahmeteils (2) in einem Abstand vor dem zum Gelenk (6) gerichteten freien Endabschnitt (5) der Zahnstange (4) endet und in der Anbaulage des Scheinwerfers zumindest der untere Wandabschnitt (18) der Führung des Aufnahmeteils (2) sich über das Ende der Gleitfläche (12) hinaus zum Gelenk (6) hin erstreckt.

10. Einstellanordnung nach einem der Ansprüche 1 bis 9, dadurch gekennzeichnet, daß die Kerben quer zur Längsausdehnung der Zahnstange verlaufende, durchgehende Wandabschnitte bilden.

## Claims

1. Setting arrangement for a reflector in motor vehicle head lamps wherein the reflector (1) is connected to a stationary receiving member (2) so that it can swivel about one or about two axes extending transversely with respect to each other and wherein at least one of the connections between the reflector (1) and the receiving member (2) is constituted by a setting device which has an actuator consisting of a toothed wheel (3) and a toothed rack (4) whose toothed wheel (3) is rotatably mounted on the receiving member (2) and its teeth mesh with the teeth of the toothed rack (4) which, at its side facing away from the toothed wheel (3), is guided for displacement in its longitudinal direction on the inner surface of the receiving member (2), its wide side surface, which has the teeth, extending parallel with respect to the swivel axis about which the reflector (1) swivels upon displacement of the toothed rack (4), and which at its free end section (5) is connected with the reflector (1) by a linkage (6) and carries the reflector (1), and which at least within a setting range of the reflector extends along an arc and follows an arc (14) of a circle at the linkage (6) described by the swivelling of the reflector (1) about the swivel axis, characterised in that the toothed rack (4), along a part section extending between the toothed wheel (3) and the linkage (6), transversely to the wide side surfaces of the toothed rack (4), is of such small cross section, at least along sections, that the toothed rack (4) can be bent into the shape of an arc.

2. Setting arrangement according to claim 1, characterised in that the toothed rack (4) is weakened in its cross section by indentations (7) which are contrived in the back facing away from the toothed wheel (3) and extend transversely with respect to the longitudinal direction of the toothed rack (4).

3. Setting arrangement according to claim 2, characterised in that the indentations (7) are equally spaced apart from each other.

4. Setting arrangement according to claim 1 or 2, characterised in that the indentations (7) have a taper narrowing towards the base.

5. Setting arrangement according to one of claims 2 to 4, characterised in that the indentations (7) are contrived in at least one rib (8) which is formed on the back of the toothed rack (4) and extends in the longitudinal direction of the toothed rack (4).

6. Setting arrangement according to claim 5, characterised in that the indentations (7) form slots in at least part of the rib along its entire height.

7. Setting arrangement according to one of claims 1 to 6, characterised in that the toothed rack (4) is tightly gripped between three locations (9, 10 and 11), of which one location (9) is formed by the toothed wheel (3) and the two other locations (10 and 11) are formed by a slide surface (12) of the guide (16) of the receiving member (2), the location (9), as seen transversely with respect to the longitudinal direction of the toothed rack (4), being arranged between the two locations (10 and 11).

8. Setting arrangement according to claim 7, characterised in that the toothed rack (4), in its gripped state, describes an arc (13) of a circle whose centre lies near the centre of the arc (14) of a circle described at the linkage (6) by the reflector (1) as it swivels.

9. Setting arrangement according to claim 7 or 8, characterised in that the slide surface (12) of the guide (16) of the receiving member (2), which serves for the back of the toothed rack (4), ends spaced short of the free end section (5) of the toothed rack (4) directed towards the linkage (6), and in the installed position of the head lamp at least the lower wall section (18) of the guide of the receiving member (2) extends beyond the end of the slide surface (12) towards the linkage (6).

10. Setting arrangement according to one of claims 1 to 9, characterised in that the indentations form wall sections, extending right through, transversely with respect to the longitudinal direction of the toothed rack.

## Revendications

1. Agencement de réglage pour un réflecteur dans des projecteurs de véhicules automobiles, le réflecteur (1) étant relié à une pièce de logement (2) en position fixe, de manière à pouvoir pivoter autour d'un axe ou de deux axes s'étendant perpendiculairement l'un par rapport à l'autre, et l'une au moins des liaisons entre le réflecteur (1) et la pièce de logement (2) étant établie par un dispositif de réglage, qui comprend un mécanisme d'entraînement constitué d'une roue dentée (3) et d'une crémaillère (4), la roue dentée (3) étant montée en rotation sur la pièce de logement (2) et, avec ses dents, engrene avec les dents de la crémaillère (4), qui, sur le côté opposé à celui où se trouve la roue dentée (3), est guidée de manière coulissante le long de son étendue longitudinale, sur le côté intérieur de la pièce de logement (2), qui, avec une face latérale large comportant les dents, s'étend parallèlement à l'axe de pivotement autour duquel pivote le réflecteur (1) lors du coulissement de la crémaillère (4), et qui, par un tronçon d'extrémité libre (5), est relié au réflecteur (1) par l'intermédiaire d'un joint d'articulation (6), et porte le réflecteur (1), et qui, au moins sur une plage de réglage du réflecteur, s'étend sur un arc et suit, au niveau du joint d'articulation (6), un arc de cercle (14) prédéterminé par le réflecteur (1) lors de son pivotement autour de l'axe de pivotement, caractérisé en ce que la crémaillère (4), sur un tronçon partiel s'étendant entre la roue dentée (3) et le joint d'articulation (6), présente transversalement aux faces latérales larges de la crémaillère (4), au moins sur certains tronçons, une section droite suffisamment faible pour que la crémaillère (4) puisse être cintrée selon un arc.

2. Agencement de réglage selon la revendication 1, caractérisé en ce que la crémaillère (4) est affaiblie dans sa section droite, par des entailles (7), qui sont réalisées sur le côté arrière opposé à celui ou se trouve la roue dentée (3), et s'étendent transversalement à l'étendue longitudinale de la crémaillère (4).

3. Agencement de réglage selon la revendication 2, caractérisé en ce que les entailles (7) présentent entre-elles un intervalle de même grandeur.

4. Agencement de réglage selon la revendication 1 ou 2, caractérisé en ce que les entailles (7) se rétrécissent en direction de leur fond.

5. Agencement de réglage selon l'une des revendications 2 à 4, caractérisé en ce que les entailles (7) sont réalisées dans au moins une nervure (8) formée sur le côté arrière de la crémaillère (4) et s'étendant dans la direction de l'étendue longitudinale de la crémaillère (4).

6. Agencement de réglage selon la revendication 5, caractérisé en ce que les entailles (7) refendent la nervure, au moins en partie, sur la totalité de sa hauteur.

7. Agencement de réglage selon l'une des revendications 1 à 6, caractérisé en ce que la crémaillère (4) est serrée fermement entre trois points (9, 10 et 11), dont l'un des points (9) est formé par la roue dentée (3), et les deux autres points (10 et 11) sont formés par une surface de glissement (12) du guidage (16) de la pièce de logement (2), le point (9) étant situé, vu dans la direction transversale à l'étendue longitudinale de la crémaillère (4), entre les deux points (10 et 11).

8. Agencement de réglage selon la revendication 7, caractérisé en ce que la crémaillère (4), dans son état serré, décrit un arc de cercle (13) dont le centre se situe à proximité du centre de l'arc de cercle (14) que décrit le réflecteur (1) au niveau du joint d'articulation (6), lors de son pivotement.

9. Agencement de réglage selon la revendication 7 ou 8, caractérisé en ce que la surface de glissement (12) du guidage (16) de la pièce de logement (2), destinée au côté arrière de la crémaillère (4), se termine à une certaine distance du tronçon d'extrémité libre (5) de la crémaillère (4), dirigé vers le joint d'articulation (6), et en ce que dans la position de montage du projecteur, au moins le tronçon de paroi inférieur (18) du guidage de la pièce de logement (2), s'étend au-delà de l'extrémité de la surface de glissement (12), en direction du joint d'articulation (6).

10. Agencement de réglage selon l'une des revendications 1 à 9, caractérisé en ce que les entailles forment des tronçons de paroi continus, s'étendant transversalement à l'étendue longitudinale de la crémaillère
